(19) **Europäisches Patentamt European Patent Office Office européen des brevets**

(11) **EP 3 198 715 B1**

(12) **FASCICULE DE BREVET EUROPEEN**

(45) Date de publication et mention de la délivrance du brevet:
**13.03.2019 Bulletin 2019/11**

(51) Int Cl.:
***H02M 7/217*** *(2006.01)* ***B60L 11/18*** *(2006.01)*
***H02J 7/02*** *(2016.01)*

(21) Numéro de dépôt: **15771677.0**

(22) Date de dépôt: **08.09.2015**

(86) Numéro de dépôt international:
**PCT/FR2015/052373**

(87) Numéro de publication internationale:
**WO 2016/046465 (31.03.2016 Gazette 2016/13)**

(54) **DISPOSITIF ET PROCÉDÉ DE DÉTERMINATION D'UNE CONSIGNE CORRIGÉE DU COURANT NEUTRE D'UN CHARGEUR SANS ISOLATION GALVANIQUE DE BATTERIE DE VÉHICULE AUTOMOBILE ÉLECTRIQUE OU HYBRIDE**

VORRICHTUNG UND VERFAHREN ZUR BESTIMMUNG EINES KORRIGIERTEN SOLLPUNKTES FÜR DEN EINFACHSTROM EINES ELEKTRO- ODER HYBRIDFAHRZEUGBATTERIELADEGERÄTS OHNE GALVANISCHE ISOLIERUNG

DEVICE AND METHOD FOR DETERMINING A SETPOINT CORRECTED FOR THE NEUTRAL CURRENT OF AN ELECTRICAL OR HYBRID AUTOMOTIVE VEHICLE BATTERY CHARGER WITHOUT GALVANIC ISOLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2014 FR 1458922**

(43) Date de publication de la demande:
**02.08.2017 Bulletin 2017/31**

(73) Titulaire: **Renault S.A.S.**
**92100 Boulogne-Billancourt (FR)**

(72) Inventeurs:
- **KVIESKA, Pedro**
  **78000 Versailles (FR)**
- **MERIENNE, Ludovic**
  **91190 Gif Sur Yvette (FR)**

(56) Documents cités:
**FR-A1- 2 943 188    FR-A1- 2 964 510**
**FR-A1- 2 974 253    FR-A1- 2 980 053**

**Description**

L'invention a pour domaine technique les chargeurs pour batterie automobile embarqués et plus particulièrement l'utilisation de tels chargeurs sur des réseaux d'alimentation électrique perturbés.

Les chargeurs embarqués sans isolation galvanique sont sensibles aux réseaux d'alimentation électrique perturbés, notamment en ce qui concerne les harmoniques de tension à basse fréquence. Dans certains cas, la connexion à un réseau perturbé génère une coupure de charge, ce qui n'est pas souhaitable pour les utilisateurs. Il est aussi possible de voir apparaitre des sur-courants, qui peuvent mettre l'électronique de puissance à rude épreuve. Ces sur-courants génèrent également des défauts qui induisent une coupure de la charge.

Une solution pour que cela n'arrive pas est de prendre une marge plus importante vis-à-vis des courants circulant dans le chargeur. Cela présente toutefois l'inconvénient de dégrader le rendement du chargeur. Par ailleurs, une diminution du rendement du chargeur dans tous les cas d'utilisation pour assurer une disponibilité totale de la charge indépendamment de la qualité du réseau ne semble pas non plus être admissible par les utilisateurs.

Il existe donc un problème technique pour concilier un rendement de charge élevé et une disponibilité de la charge quelle que soit la qualité du réseau d'alimentation électrique.

De l'état de la technique, on connait les documents suivants.

Le document WO2012052190 divulgue une décomposition et atténuation d'une perturbation présente au niveau d'une connexion électrique entre un système de génération d'énergie électrique et un réseau électrique. Ce document présente un système permettant d'améliorer la qualité d'un réseau électrique en injectant un courant bien adapté. Il s'agit d'un système complet qui n'est pas adaptable sur un véhicule.

Le document EP1665495 divulgue un procédé pour faire fonctionner une éolienne lors d'une perturbation de réseau. Ce document indique que la puissance fournie par un système d'éolienne varie en fonction de l'apparition d'une panne sur le réseau électrique.

Ces documents sont assez éloignés du domaine automobile et ne fournissent donc pas un enseignement pour concilier dans ce domaine un rendement de charge élevé et une disponibilité de la charge.

L'invention a pour objet un dispositif de détermination d'une consigne corrigée du courant neutre d'un chargeur sans isolation galvanique de batterie de véhicule automobile électrique ou hybride, le chargeur étant alimenté par un réseau d'alimentation électrique.

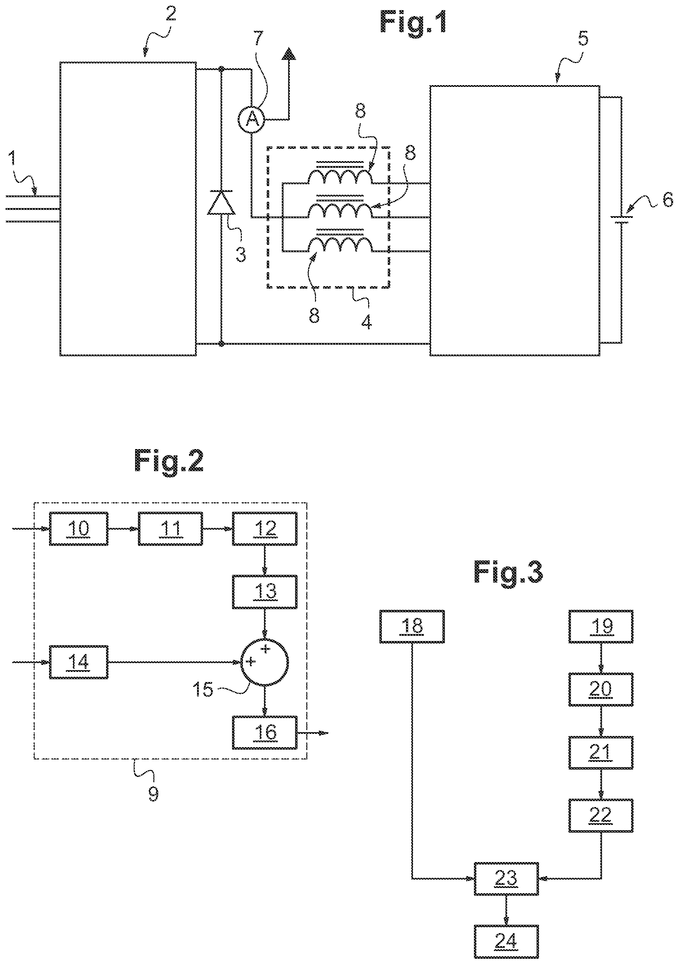

Sur la figure 1, on peut voir les principaux éléments d'un chargeur embarqué sans isolation galvanique. Un réseau triphasé 1 est connecté à un redresseur abaisseur de tension référencé 2. La cathode d'une diode 3 est connectée à la première sortie du redresseur abaisseur de tension 2, son anode étant connectée à la deuxième sortie du redresseur abaisseur de tension 2. Une première sortie du redresseur abaisseur de tension 2 est connectée aux inductances 8 d'une machine électrique 3, elles-mêmes connectées à un onduleur élévateur de tension référencé 5. Les sorties de l'onduleur élévateur de tension 5 sont connectées à la batterie 6.

Le courant neutre est mesuré par un capteur 7 de mesure de courant entre la première sortie du redresseur abaisseur de tension 2, la cathode de la diode 3 et la machine électrique 4. Le document FR 2943188 illustre plus en détail la structure d'un chargeur tel que décrit ci-dessus.

Plus généralement on appelle « courant neutre » dans cette demande de brevet, le courant du bus continu en sortie du redresseur d'entrée d'un chargeur sans isolation galvanique comportant ledit redresseur d'entrée suivi généralement d'un étage élévateur de tension. Cette appellation « courant neutre » est due au fait que ce courant, dans le cas du document FR2943188, arrive à l'entrée du neutre des bobinages statoriques réutilisés dans l'étage élévateur de tension du chargeur comme inductances de stockage d'énergie. L'invention est aussi applicable à d'autres types de chargeurs comportant au moins un étage redresseur. Dans la variante du document FR2943188 comportant une inductance additionnelle en série entre l'ampèremètre 7 et les bobinages statoriques 8, le « courant neutre » est le courant parcourant cette inductance additionnelle.

Le dispositif selon l'invention comprend un moyen de verrouillage de phase de boucle apte à déterminer une fréquence instantanée du réseau en fonction d'une mesure de la tension du réseau d'alimentation électrique, et une cartographie de régulation apte à déterminer une consigne de courant neutre en fonction d'une consigne de courant de batterie.

Le dispositif comprend en outre un moyen de calcul de l'amplitude de la variation de fréquence du réseau en fonction de la fréquence instantanée du réseau, une cartographie de correction recevant en entrée la valeur de l'amplitude de la variation de fréquence et émettant en sortie une correction de la consigne de courant neutre, et un sommateur apte à détermine une consigne corrigée de courant neutre en ajoutant la valeur de correction de la consigne de courant neutre à la consigne de courant neutre.

Le dispositif peut comprendre un filtre passe bas de la consigne d'augmentation du courant neutre.

Le dispositif peut comprendre un moyen de saturation apte à limiter la consigne de courant neutre corrigée en sortie du sommateur afin de ne pas dépasser une valeur maximale de la consigne de neutre.

Un autre objet de l'invention est un procédé de détermination d'une consigne corrigée du courant neutre en sortie d'un étage redresseur d'un chargeur sans isolation galvanique de batterie de véhicule automobile électrique ou hybride, le chargeur étant alimenté par un réseau d'alimentation électrique.

La présente invention a, également, pour objet un procédé comprenant les étapes suivantes :

on détermine une fréquence instantanée du réseau par verrouillage de phase de boucle en fonction d'une mesure de la tension du réseau d'alimentation électrique, et
on détermine une consigne de courant neutre en fonction d'une consigne de courant de batterie.

Le procédé comprend en outre les étapes suivantes :

on calcule l'amplitude de la variation de la fréquence instantanée du réseau,
on détermine une correction de la consigne de courant neutre en fonction de l'amplitude de la variation de la fréquence instantanée du réseau, et
on somme la correction de la consigne de courant neutre à la consigne de courant neutre.

On peut filtrer la correction de la consigne de courant neutre par un filtre passe bande.
On peut saturer la consigne corrigée de courant neutre afin de ne pas dépasser une valeur maximale de la consigne de neutre.
D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'un chargeur embarqué sans isolation galvanique,
- la figure 2 illustre les principaux éléments d'un dispositif de détermination d'une consigne corrigée du courant neutre, et
- la figure 3 illustre les principales étapes du procédé de détermination d'une consigne corrigée du courant neutre.

La régulation de puissance des chargeurs embarqués sans isolation galvanique, que cela soit en triphasé ou en monophasé, est tributaire de la qualité du réseau électrique. Dans un chargeur tel que décrit figure 1, on ajoute éventuellement une inductance additionnelle entre l'ampèremètre 7 et les bobinages statoriques 8, mais celle-ci reste petite afin de minimiser les couts et l'encombrement du chargeur. Cela implique que les perturbations apparaissant sur le réseau seront répercutées sur le courant neutre du chargeur c'est-à-dire en sortie du redresseur abaisseur de tension 2, même si ces perturbations sont en partie compensées par la régulation comprise dans le chargeur.
Une telle régulation emploie une valeur de l'angle électrique pour déterminer la position actuelle du cycle électrique et effectuer les transformées de Park en triphasé ou calculer le courant souhaité en sortie du redresseur abaisseur de tension en monophasé. La valeur de l'angle électrique est déterminé par un moyen de verrouillage de phase de boucle (acronyme anglais « PLL » pour « phase locked loop »)
La tension réseau peut s'écrire comme :

$$V(t) = V_0 * sin(\omega t), \qquad\qquad (Eq. 1)$$

avec $V_0$ l'amplitude, $\omega$ la pulsation et $t$ le temps.
La sortie du moyen de verrouillage de phase de boucle correspond alors au terme $\omega t$.
Pour diverses raisons décrites dans le document FR2974253, la consigne du courant neutre doit être à tout instant supérieure aux courants d'entrée et au courant de batterie. Lorsqu'il existe des perturbations sur le réseau d'alimentation électrique, le courant neutre est perturbé ce qui peut se propager au courant de ligne. Le courant de ligne est le courant dans les phases, et donc le courant à l'entrée du chargeur. Comme ce courant est construit à partir du courant neutre, des perturbations du courant neutre se retrouvent donc sur le courant d'entrée du chargeur. En pratique, cela se traduit par une impossibilité de puiser le courant souhaité dans le réseau d'alimentation électrique. Dans certains cas les perturbations font que la régulation n'arrive pas à asservir le courant à sa consigne, ce qui peut conduire à un arrêt de charge. Dans d'autres cas, la régulation peut être perturbée au point que le courant de batterie atteint des niveaux dangereux pour le système.
En effet, dans un fonctionnement normal du système, le courant neutre augmente puis oscille autour de la consigne de courant pendant une phase préalable à la charge. Il est ensuite régulé autour de cette valeur de consigne, et ce avec de faibles oscillations.
Cependant, avec un chargeur de l'état de la technique, l'injection d'une perturbation de 9% sur l'harmonique de troisième ordre du réseau triphasé, soit par exemple 150Hz, génère une coupure de la charge.

Cette coupure résulte de la protection par OCP (acronyme anglais pour « Over-Current Protection », protection contre les dépassements de courant) réglée à environ 300A et présente dans le chargeur. Cette protection est indépendante de la régulation.

Une solution pour cette problématique, comme évoqué plus haut, serait d'augmenter la valeur de consigne du courant neutre. Plus précisément, les coupures de charge pour cause de courant neutre nul ou de protection par OCP, arrivent quand le courant de ligne n'arrive plus à être correctement construit. Cela arrive quand le courant neutre est trop bas. On dit alors qu'il "touche" le courant de ligne. Plus le réseau est perturbé, plus le courant neutre sera perturbé et plus il est possible que le courant de ligne souhaité soit au niveau du courant neutre. En augmentant la consigne de courant neutre malgré les oscillations augmentées par les perturbations, la régulation se passe mieux. Dans l'exemple précédent d'injection d'une perturbation de 9% sur l'harmonique de troisième ordre du réseau triphasé, une consigne de courant neutre 30A plus élevée, permet de maintenir le fonctionnement de la régulation sans danger, et ce, malgré d'importantes oscillations. Cette solution permet donc de continuer à charger la batterie du véhicule.

Toutefois, la modification de la consigne de courant neutre doit être réalisée en fonction de l'électronique de contrôle. En effet, la consigne de courant neutre ne peut pas monter indéfiniment, et doit toujours respecter la valeur maximale du courant neutre qui déclencherait l'OCP. On peut donc estimer que cette solution ne sera pas toujours applicable à la puissance maximale de charge. En effet, dans un tel cas, le courant neutre est déjà très élevé et distant de la valeur maximale d'une faible marge.

Ainsi, si on est en mesure d'identifier que le réseau est perturbé et si on augmente la consigne du courant neutre, la disponibilité de charge sur des réseaux perturbés est améliorée. La contrepartie de cette amélioration de disponibilité est un moins bon rendement sur ces réseaux perturbés, et donc un plus long temps de charge que sur un réseau exempt de perturbations.

La qualité du réseau peut être estimée de façon simple et fiable par la sortie du moyen de verrouillage de phase de boucle. Comme décrit plus haut, le moyen de verrouillage de phase de boucle permet de reconstruire le sinus de la tension en faisant l'hypothèse de l'équation 1.

Le moyen de verrouillage de phase de boucle a également comme sortie la fréquence instantanée $f = \omega/2\pi$ Si le moyen de verrouillage de phase de boucle fonctionne parfaitement, $\omega t$ est un signal en dents de scie oscillant entre 0 et $2\pi$, et la fréquence est constante. Plus le réseau devient perturbé (notamment à basse fréquence), plus le signal $\omega t$ est déformé, ce qui correspond à une fréquence instantanée qui n'est pas constante.

Dans le cas d'un moyen de verrouillage de phase de boucle qui fonctionne correctement, la fréquence est constante, et l'amplitude de variation de la fréquence est de quelques pourcents sur les quelques centaines de millisecondes. En d'autres termes, lorsqu'il y a peu de perturbations sur le réseau, la fréquence émise en sortie du moyen de verrouillage de phase de boucle varie peu.

On peut simuler un réseau d'alimentation perturbé en insérant, par exemple, une perturbation de 7% de l'harmonique de cinquième ordre du réseau. Dans un tel cas, le moyen de verrouillage de phase de boucle est également perturbé avant et après la charge avec des variations de fréquence plus grandes d'au moins un ordre.

On peut donc conclure que l'amplitude de sortie de la fréquence instantanée du moyen de verrouillage de phase de boucle est un indicateur fiable pour estimer la qualité du réseau d'alimentation électrique.

Par ailleurs, lors de la simulation d'un réseau perturbé, il apparaît que l'augmentation de la consigne de courant, par exemple de 30A, permet de maintenir la charge de la batterie malgré des variations importantes de la fréquence du réseau.

Le verrouillage de phase de boucle est donc un indicateur fiable de la perturbation réseau.

On détermine actuellement la consigne de courant neutre par l'intermédiaire d'une cartographie qui dépend de la consigne du courant de batterie. La consigne du courant de batterie est à son tour une image de la puissance.

Ainsi, afin de maintenir la possibilité de charger la batterie lorsque le réseau d'alimentation électrique est perturbé, on ajoute une correction (11,12,13,15) de la consigne de courant neutre issue de cette cartographie, dite ici cartographie de régulation 14. La correction dépend de l'amplitude de variation de la fréquence du réseau d'alimentation électrique issue du moyen de verrouillage de phase de boucle 10. La détermination de l'amplitude de la correction en fonction des variations de fréquence en sortie du moyen de verrouillage de phase de boucle dépend de chaque type de chargeur de véhicule, de sorte qu'une détermination empirique doit être effectuée.

La figure 2 illustre le dispositif 9 de détermination d'une consigne corrigée du courant neutre qui comprend un moyen 10 de verrouillage de phase de boucle, un moyen 11 de calcul d'amplitude de variation de fréquence, une cartographie 12 de correction, un filtre 13 passe bas, une cartographie de régulation 14, un sommateur 15 et un moyen de saturation 16.

Le moyen 10 de verrouillage de phase de boucle reçoit en entrée une mesure de la tension du réseau d'alimentation électrique et émet en sortie une fréquence instantanée de ce réseau.

Le moyen 11 de calcul de l'amplitude de la variation de fréquence du réseau reçoit cette fréquence instantanée et émet une valeur d'amplitude de variation de fréquence, notamment en Hz

La cartographie 12 de correction reçoit en entrée la valeur de l'amplitude de variation de fréquence et émet en sortie une correction de la consigne de courant neutre, notamment sous la forme d'une consigne d'augmentation du courant neutre. Par exemple, une valeur d'amplitude de variation de fréquence de 5Hz peut correspondre à une augmentation de 30A de la consigne du courant neutre.

La valeur de correction de la consigne de courant neutre est filtrée par le filtre passe bas 13, qui est utilisé pour éviter des changements brusques de consigne.

La cartographie de régulation 14 permet de déterminer la consigne de courant neutre en fonction d'une consigne de courant de batterie.

Le sommateur 15 permet d'ajouter la valeur de correction de la consigne de courant neutre issue du filtre passe bas 13 à la consigne de courant neutre en sortie de la cartographie de régulation 14.

Le moyen de saturation 16 permet de limiter la consigne de courant neutre corrigée en sortie du sommateur 15 afin de ne pas dépasser les bornes physiques du système. En effet, la valeur maximale de la consigne de neutre n'est pas infinie en raison de la présence de l'OCP.

La figure 3 illustre le procédé de détermination d'une consigne corrigée du courant neutre.

Au cours d'une première étape 18, on détermine une consigne de courant neutre en fonction d'une consigne de courant de batterie.

Au cours d'une deuxième étape 19, on détermine une fréquence instantanée du réseau d'alimentation électrique par l'intermédiaire d'un verrouillage de phase de boucle appliqué à une mesure de tension du réseau d'alimentation électrique.

Au cours d'une troisième étape 20, on calcule l'amplitude de la variation de la fréquence instantanée du réseau, puis on détermine une correction de la consigne de courant neutre en fonction de l'amplitude de la variation de la fréquence instantanée du réseau, au cours d'une quatrième étape 21.

Au cours d'une cinquième étape 22, on filtre la correction de la consigne de courant neutre, puis on la somme à la consigne de courant de neutre, au cours d'une sixième étape 23.

Au cours d'une septième étape 24, la consigne corrigée de courant neutre est ensuite saturée en fonction de paramètres du système, notamment du niveau de la protection contre les sur-courants OCP.

## Revendications

1. Dispositif de détermination d'une consigne corrigée du courant neutre défini comme le courant du bus de sortie d'un étage redresseur d'un chargeur sans isolation galvanique de batterie de véhicule automobile électrique ou hybride, le chargeur étant apte à être alimenté par un réseau d'alimentation électrique,
le dispositif comprenant un moyen (10) de verrouillage de phase de boucle apte à déterminer une fréquence instantanée du réseau en fonction d'une mesure de la tension du réseau d'alimentation électrique, et une cartographie de régulation (14) apte à déterminer une consigne de courant neutre en fonction d'une consigne de courant de batterie,
**caractérisé par le fait qu'**il comprend
un moyen (11) de calcul de l'amplitude de la variation de fréquence du réseau en fonction de la fréquence instantanée du réseau,
une cartographie (12) de correction recevant en entrée la valeur de l'amplitude de la variation de fréquence et émettant en sortie une valeur de correction de la consigne de courant neutre, et
un sommateur (15) apte à déterminer une consigne corrigée de courant neutre en ajoutant la valeur de correction de la consigne de courant neutre à la consigne de courant neutre.

2. Dispositif selon la revendication précédente, comprenant un filtre passe bas (13) de la valeur de correction de la consigne de courant neutre.

3. Dispositif selon l'une quelconque des revendications précédentes, comprenant un moyen de saturation (16) apte à limiter la consigne de courant neutre corrigée en sortie du sommateur (15) afin de ne pas dépasser une valeur maximale de la consigne de courant neutre.

4. Procédé de détermination d'une consigne corrigée du courant neutre défini comme le courant du bus de sortie d'un étage redresseur d'un chargeur sans isolation galvanique de batterie de véhicule automobile électrique ou hybride, le chargeur étant alimenté par un réseau d'alimentation électrique,
le procédé comprend les étapes suivantes :

on détermine une fréquence instantanée du réseau par verrouillage de phase de boucle en fonction d'une mesure de la tension du réseau d'alimentation électrique, et

on détermine une consigne de courant neutre par l'intermédiaire d'une cartographie en fonction d'une consigne de courant de batterie,

le procédé étant **caractérisé par le fait qu'**il comprend les étapes suivantes :

on calcule l'amplitude de la variation de la fréquence instantanée du réseau,
on détermine une correction de la consigne de courant neutre en fonction de l'amplitude de la variation de la fréquence instantanée du réseau, et
on somme la correction de la consigne de courant neutre à la consigne de courant neutre.

5. Procédé selon la revendication 4, dans lequel on filtre la correction de la consigne de courant neutre par un filtre passe bas.

6. Procédé selon l'une quelconque des revendications 4 ou 5, dans lequel on sature la consigne corrigée de courant neutre afin de ne pas dépasser une valeur maximale de la consigne de neutre.


**Patentansprüche**

1. Vorrichtung zur Bestimmung eines korrigierten Sollwertes des Einfachstroms, der als der Strom des Ausgangsbusses einer Gleichrichterstufe eines Batterieladegerätes ohne galvanische Trennung für ein Elektro- oder Hybridkraftfahrzeug definiert ist, wobei das Ladegerät dafür ausgelegt ist, von einem Stromversorgungsnetz versorgt zu werden, wobei die Vorrichtung ein Phasenverriegelungsschleifen-Mittel (10), das dafür ausgelegt ist, eine momentane Frequenz des Netzes in Abhängigkeit von einem Messwert der Spannung des Stromversorgungsnetzes zu bestimmen, und ein Regelkennfeld (14) das dafür ausgelegt ist, einen Sollwert des Einfachstroms in Abhängigkeit von einem Sollwert des Batteriestroms zu bestimmen, umfasst, **dadurch gekennzeichnet, dass** sie umfasst:

ein Mittel (11) zur Berechnung der Amplitude der Frequenzabweichung des Netzes in Abhängigkeit von der momentanen Frequenz des Netzes,
ein Korrekturkennfeld (12), das am Eingang den Wert der Amplitude der Frequenzabweichung empfängt und am Ausgang einen Korrekturwert des Sollwertes des Einfachstroms ausgibt, und
einen Summierer (15), der dafür ausgelegt ist, einen korrigierten Sollwert des Einfachstroms durch Hinzufügen des Korrekturwertes des Sollwertes des Einfachstroms zum Sollwert des Einfachstroms zu bestimmen.

2. Vorrichtung nach dem vorhergehenden Anspruch, welche ein Tiefpassfilter (13) für den Korrekturwert des Sollwertes des Einfachstroms umfasst.

3. Vorrichtung nach einem der vorhergehenden Ansprüche, welche ein Sättigungsmittel (16) umfasst, das dafür ausgelegt ist, den korrigierten Sollwert des Einfachstroms am Ausgang des Summierers (15) zu begrenzen, um einen maximalen Wert des Sollwertes des Einfachstroms nicht zu überschreiten.

4. Verfahren zur Bestimmung eines korrigierten Sollwertes des Einfachstroms, der als der Strom des Ausgangsbusses einer Gleichrichterstufe eines Batterieladegerätes ohne galvanische Trennung für ein Elektro- oder Hybridkraftfahrzeug definiert ist, wobei das Ladegerät von einem Stromversorgungsnetz versorgt wird,
wobei das Verfahren die folgenden Schritte umfasst:

es wird eine momentane Frequenz des Netzes durch eine Phasenverriegelungsschleife in Abhängigkeit von einem Messwert der Spannung des Stromversorgungsnetzes bestimmt, und
es wird ein Sollwert des Einfachstroms über ein Kennfeld in Abhängigkeit von einem Sollwert des Batteriestroms bestimmt,

wobei das Verfahren **dadurch gekennzeichnet ist, dass** es die folgenden Schritte umfasst:

es wird die Amplitude der Abweichung der momentanen Frequenz des Netzes bestimmt,
es wird eine Korrektur des Sollwertes des Einfachstroms in Abhängigkeit von der Amplitude der Abweichung der momentanen Frequenz des Netzes bestimmt, und
die Korrektur des Sollwertes des Einfachstroms wird zum Sollwert des Einfachstroms addiert.

**5.** Verfahren nach Anspruch 4, wobei die Korrektur des Sollwertes des Einfachstroms durch ein Tiefpassfilter gefiltert wird.

**6.** Verfahren nach einem der Ansprüche 4 oder 5, wobei der korrigierte Sollwert des Einfachstroms gesättigt wird, um einen maximalen Wert des Sollwertes des Einfachstroms nicht zu überschreiten.

**Claims**

**1.** Device for determining a corrected setpoint of the neutral current, defined as the current of the output bus of a rectifier stage of an electric or hybrid motor vehicle battery charger without galvanic isolation, the charger being able to be supplied with power by an electric power supply grid,

the device comprising a phase-locked loop means (10) able to determine an instantaneous frequency of the grid on the basis of a measurement of the voltage of the electric power supply grid, and a control map (14) able to determine a neutral current setpoint on the basis of a battery current setpoint,
**characterized in that** it comprises
a means (11) for calculating the amplitude of the frequency variation of the grid on the basis of the instantaneous frequency of the grid,
a correction map (12) receiving the value of the amplitude of the frequency variation at input and emitting a correction value of the neutral current setpoint at output, and
a summer (15) able to determine a corrected neutral current setpoint by adding the correction value of the neutral current setpoint to the neutral current setpoint.

**2.** Device according to the preceding claim, comprising a low-pass filter (13) for filtering the correction value of the neutral current setpoint.

**3.** Device according to either one of the preceding claims, comprising a saturation means (16) able to limit the corrected neutral setpoint current at the output of the summer (15) so as not to exceed a maximum value of the neutral current setpoint.

**4.** Method for determining a corrected setpoint of the neutral current, defined as the current of the output bus of a rectifier stage of an electric or hybrid motor vehicle battery charger without galvanic isolation, the charger being supplied with power by an electric power supply grid,
the method comprises the following steps:

determining an instantaneous frequency of the grid by way of a phase-locked loop on the basis of a measurement of the voltage of the electric power supply grid, and
determining a neutral current setpoint by way of a map on the basis of a battery current setpoint,

the method being **characterized in that** it comprises the following steps:

calculating the amplitude of the variation of the instantaneous frequency of the grid,
determining a correction of the neutral current setpoint on the basis of the amplitude of the variation of the instantaneous frequency of the grid, and
summing the correction of the neutral current setpoint and the neutral current setpoint.

**5.** Method according to Claim 4, wherein the correction of the neutral current setpoint is filtered by a low-pass filter.

**6.** Method according to either one of Claims 4 and 5, wherein the corrected neutral current setpoint is saturated so as not to exceed a maximum value of the neutral setpoint.

# Fig.1

# Fig.2

# Fig.3

**EP 3 198 715 B1**

## RÉFÉRENCES CITÉES DANS LA DESCRIPTION

**Documents brevets cités dans la description**

- WO 2012052190 A
- EP 1665495 A
- FR 2943188
- FR 2974253